# EUROPÄISCHE PATENTSCHRIFT

(11) **EP 1 010 583 B1**
(45) Veröffentlichungstag und Bekanntmachung des Hinweises auf die Patenterteilung: **20.04.2005**
(21) Anmeldenummer: 99123265.3
(22) Anmeldetag: 29.11.1999
(51) Int. Cl.: B60R 16/02

(54) **Elektronische Einrichtung**
Electronic device
Dispositif électronique

(30) Priorität: 15.12.1998 DE 19857824; 27.04.1999 DE 19919098
(43) Veröffentlichungstag der Anmeldung: 21.06.2000
(73) Patentinhaber: Siemens Aktiengesellschaft, 80333 München (DE)
(72) Erfinder: Wolf, Barbara, 65824 Schwalbach (DE); Wiezorek, Hans-Werner, 65817 Eppstein (DE); Sellner, Volker, 61276 Weilrod (DE)

(56) Entgegenhaltungen:
- DE-A- 4 240 755
- US-A- 4 639 834
- US-A- 5 016 139
- US-A- 5 297 025

## Beschreibung

Die Erfindung betrifft eine elektronische Einrichtung für ein Kraftfahrzeug nach dem Oberbegriff des Anspruchs 1. Eine derartige Einrichtung ist aus der US 4 639 834 A bekannt.

Es sind Steuergeräte bekannt, welche neben der Steuerelektronik auch eine Leistungsendstufe zur Ansteuerung eines im Kraftfahrzeug angeordneten Stellgliedes enthalten. Bei der Ansteuerung des Stellgliedes, wie beispielsweise eines Elektromotors für Fensterheber oder zur Realisierung eines Ventilhubes in einem Kraftfahrzeug werden durch die Leistungsendstufen hohe Ströme bereitgestellt. Im Falle einer getakteten Ansteuerung des Stellgliedes werden durch das Schalten der hohen Ströme Störsignale innerhalb des Steuergerätes erzeugt, deren Pegel um ein Vielfaches größer sind als die Pegel der Signale, welche die Steuerelektronik verarbeitet. Durch die räumlich dichte Anordnung dieser unterschiedlichen Schaltungen beim Steuergerät werden die Signale der Steuereinrichtung durch diese elektromagnetischen Störsignale beeinflußt. Um die elektromagnetische Verträglichkeit dieser beiden Anordnungen herzustellen, sind in den Steuergeräten Kondensatoren elektrisch verschaltet, welche die Störsignale kompensieren.

Sowohl die Leistungselektronik als auch die Kondensatoren erzeugen im Betrieb eine hohe Verlustwärme, welche über das Gehäuse an die Umgebung abgegeben wird.

Um die entstehende Wärme schnell abzuführen, sind umfangreiche konstruktive Gehäusegestaltungen in Form von Kühlkörpern notwendig.

Der Erfindung liegt die Aufgabe zugrunde, eine elektronische Einrichtung anzugeben, welche einfach herstellbar ist, und bei welcher die von den elektronischen Schaltungen erzeugte Wärme die Funktion der elektronischen Schaltungen nicht weiter beeinflußt.

Erfindungsgemäß ist die Aufgabe durch die kennzeichnenden Merkmale des Anspruchs 1 gelöst, wobei die Kondensatoreinheit wärmetechnisch mit einem ersten Bereich und die Elektronikeinheit wärmetechnisch mit einem zweiten Bereich eines ersten Gehäuseteiles verbunden ist.

Der Vorteil der Erfindung besteht darin, daß die beiden, Verlustwärme erzeugenden Kompenenten ihre Wärme an unterschiedliche Bereiche desselben Gehäuseteiles abgeben, wodurch eine schnelle Wärmeabfuhr über die gesamte Fläche des ersten Gehäuseteiles gewährleistet wird. Damit wird der bestmögliche Wärmeaustausch zwischen Elektronik und dem Gehäuseteil ersielt. Aufgrund dieser Wärmeverteilung kann auf die Verwendung eines als Kühlkörper gestalteten zweiten Gehäuseteiles verzichtet werden.

In einer Ausgestaltung ist die Kondensatoreinheit auf einer, dem ersten Gehäuseteil zugewandten Oberfläche des Trägersubstrates angeordnet, während die Elektronikeinheit auf einer, dem Gehäuseteil abgewandten Oberfläche des Trägersubstrates angeordnet ist, wobei der erste Bereich des ersten Gehäuseteiles auf der Kondensatoreinheit aufliegt, während der zweite Bereich des ersten Gehäuseteiles annähernd vollständig auf der, dem ersten Gehäuseteil zugewandten Oberfläche aufliegt.

Durch diese Anordnung wird eine, den Einbauerfordernissen im Kraftfahrzeug entsprechende flache elektronische Einrichtung bereitgestellt, bei welcher der zur Verfügung stehende Bauraum sowohl innerhalb der elektronischen Einrichtung selbst als auch im Kraftfahrzeug optimal genutzt werden kann.

Vorteilhafterweise sind die, die Elektronikeinheit bildenden Bauteile auf der dem ersten Gehäuseteil abgewandten Oberfläche oberflächenmontiert. Auch die elektrische Verbindung der Kondensatoreinheit bzw. einer Steckereinheit mit der Elektronikeinheit kann über diese Oberflächenmontage erfolgen.

In einer Ausgestaltung ist der erste Bereich des ersten Gehäuseteiles zur formschlüssigen Aufnahme der Kondensatoreinheit an seiner Innenfläche an die Außenkontur der Kondensatoreinheit angepaßt.

Insbesondere bei der Verwendung von handelsüblichen Kondensatorzellen, weist die Innenfläche des ersten Bereiches des ersten Gehäuseteiles der Außenkontur der Kondensatorelemente entsprechende halbkreisförmige Vertiefungen auf. Bei dieser Anordnung liegt das erste Gehäuseteil direkt auf den Kondensatorzellen auf, wodurch ein unmittelbarer Wärmekontakt entsteht.

Zwischen der Kondensatoreinheit und dem ersten Gehäuseteil ist eine Wärmleitkleberschicht angeordnet. Diese Wärmeleitkleberschicht überträgt nicht nur die von der Kondensatoreinheit erzeugte Wärme an den ersten Bereich des ersten Gehäuseteiles, sondern gleicht zusätzlich die bauliche Toleranzlage der Kondensatorzellen innerhalb des Gehäuses aus, was durch die Fixierung am ersten Gehäuseteil noch unterstützt wird.

In einer Ausgestaltung ist zwischen dem ersten und einem zweiten Gehäuseteil eine nach außen geführte Steckereinheit angeordnet, deren Stekkerelemente zur Herstellung einer elektrischen Verbindung mit der Kondensatoreinheit oder der Elektronikeinheit auf dem Trägersubstrat verbunden sind.

Die Erfindung läßt zahlreiche Ausführungsformen zu. Eine davon soll anhand der in der Zeichnung dargestellten Figuren näher erläutert werden. Es zeigt:
- Figur 1:: Draufsicht auf die erfindungsgemäße Einrichtung.
- Figur 2:: Schnitt durch die erfindungsgemäße Einrichtung.

Gleiche Merkmale sind mit gleichen Bezugszeichen gekennzeichnet.

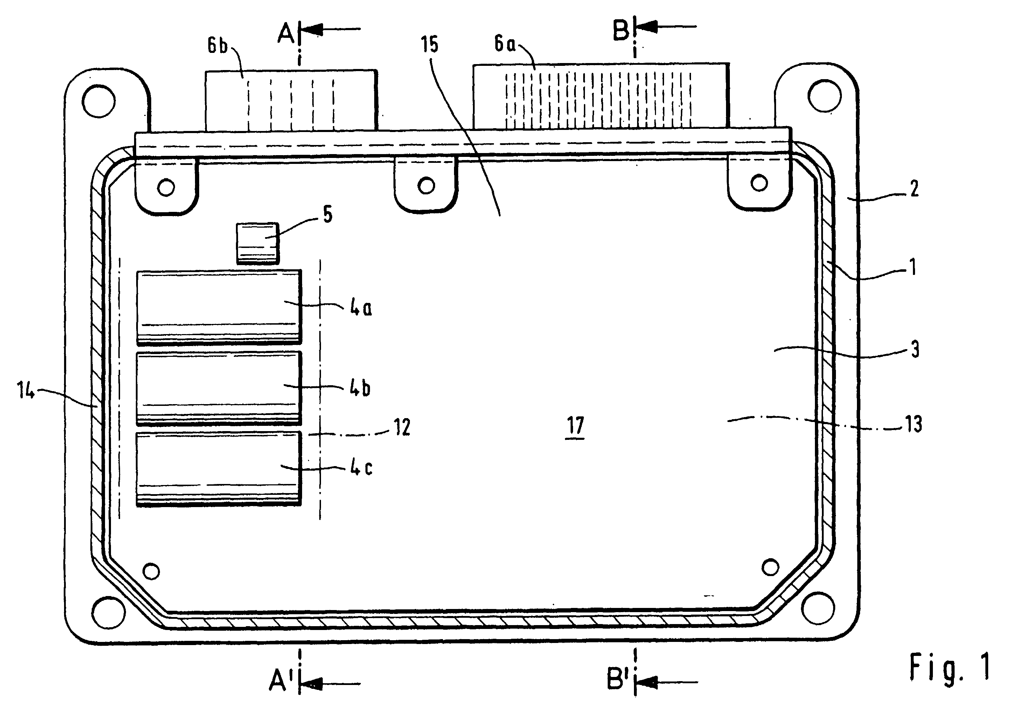

In Figur 1 ist der prinzipielle Aufbau der erfindungsgemäßen Einrichtung dargestellt, wie sie zur Ansteuerung eines Elektromotors verwendet wird, der den Ventilhub eines Lufteinlaßventiles eines Verbrennungsmotors einstellt. Die elektronische Einrichtung besteht aus zwei Gehäuseteilen 1 und 2. Zwei Steckereinheiten 6a bzw. 6b ragen aus dem Gehäuse 1, 2 heraus. In räumlicher Nähe zum Steckmodul 6b ist eine Kondensatoreinheit bestehend aus drei Kondensatorzellen 4a bis 4c angeordnet. Neben den Kondensatorzellen 4 a, 4b, 4c ist eine Zenerdiode 5 vorgesehen, um Stromspitzen zu unterbinden und somit die elektronische Schaltung vor einer Zerstörung zu schützen. Das erste Gehäuseteil 1 weist hinsichtlich der wärmetechnischen Anbindung der Elektronik zwei Bereiche auf. Der erste Bereich 12 des ersten Gehäuseteiles 1 erstreckt sich entlang der gesamten Ausdehnung der Kondensatorzellen 4a, 4b, 4c von Gehäuserand 14 bis über das Ende der Kondensatoreinheit 4a, 4b, 4c hinaus. Daran schließt sich parallel zur Steckereinrichtung 6a ein zweiter Bereich 13 des Gehäuseteiles 1 an.

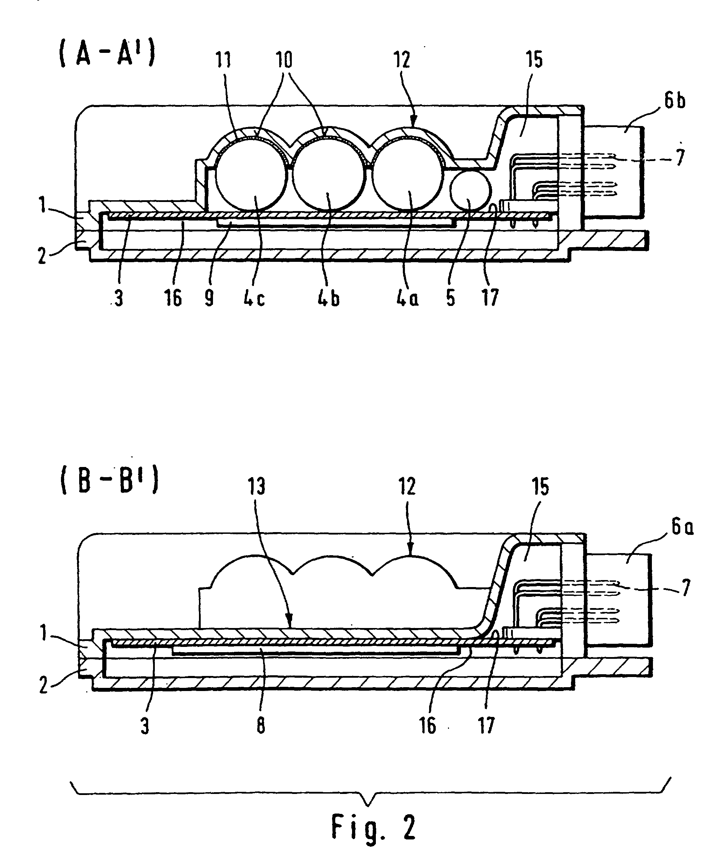

Die Gestaltung der beiden Bereiche 12, 13 des Gehäuseteiles 1 sollen im Zusammenhang mit Figur 2 erläutert werden. Diese zeigt zwei Schnitte durch die erfindungsgemäße Einrichtung.

Im Schnitt A-A' ist zwischen den Gehäuseteilen 1 und 2 die Steckereinheit 6b dicht angeordnet. Die Steckeinheit 6b weist mehrere als Stanzbiegeteil ausgebildete Steckerelemente 7 auf, welche nach außen geführt sind und zum Anschluß eines Gegensteckers dienen. Im Gehäuseinneren 15 sind die Steckerelemente 7 mit einer Leiterplatte 3 verlötet, welche zwischen den beiden Gehäuseteilen 1 und 2 gelagert ist. Die Steckerelemente 7 stellen somit eine elektrische Verbindung mit einer Steuerelektronik 9 her, welche in Abhängigkeit des zu überwachenden Prozesses Steuersignale für ein Leistungsendstufenmodul 8 erzeugt.

Die Steuerelektronik 9 ist auf einer Seite 16 der Leiterplatte 3 gegenüberliegend zu den drei Kondensatorzellen 4a, 4b, 4c sowie der Zenerdiode 5 angeordnet, welche auf der zweiten Seite 17 der Leiterplatte 3 angebracht sind. Die Kondensatorzellen 4a, 4b, 4c greifen dabei formschlüssig in Ausnehmungen 10 ein, welche an der Innenseite des ersten Bereiches 12 des zweiten Gehäuseteiles 1 ausgebildet sind. Im vorliegenden Fall sind diese Ausnehmungen 10 halbkreisförmig ausgebildet. Auf diese Weise wird ein direkter Wärmekontakt der Kondensatorzellen 4a, 4b, 4c mit dem ersten Gehäuseteil 1 hergestellt.

Die Leiterplatte 3 wird dabei von dem ersten Gehäuseteil 1 sowie der Stekkereinheit 6b getragen. Zwischen den einzelnen Kondensatorzellen 4a, 4b, 4c und jeder Ausnehmung 10 ist eine Wärmeleitkleberschicht 11 zur verbesserten Wärmeabfuhr angeordnet.

Wie dem Schnitt B-B' zu entnehmen ist, ist eine weitere Steckereinheit 6a über ebenfalls als Blechformteil ausgebildete Steckerelemente 7 mit der Leiterplatte 3 verbunden. Auch hier dient das Steckerelement 6 a zum Anschluß an einen Gegenstecker, welcher der Energieversorgung der sich in diesem Bereich auf der Leiterplatte 3 befindenden Leistungsendstufenelektronik 8 gewährleistet. Des weiteren wird über dieses Steckerelement 6a die von der Leistungsendstufenelektronik 8 nach Anforderung durch die Steuerelektronik 9 bereitgestellten Schaltspannung bzw. -ströme für den Elektromotor generiert und an diesen übertragen. Auch die Leistungsendstufenelektronik 8 ist auf der, dem zweiten Gehäuseteil zugewandten Oberfläche 16 der Leiterplatte 3 angeordnet. Der zweite Bereich 13 des ersten Gehäuseteiles 1 liegt in diesem Bereich flächig auf der Gegenseite 17 der Leiterplatte 3 auf und bildet somit einen direkten Wärmekontakt. Sowohl die Bauelemente der Steuerelektronik 9 sowie die Bauelemente der Leistungsendstufenelektronik 8, als auch die Steckerelemente 7 und die elektrische Verbindung der Kondensatoren 4a, 4b, 4c sind auf der dem zweiten Gehäuseteil 2 zugewandten Oberfläche 16 der Leiterplatte 3 mittels der an sich bekannten SMD-Technik oberflächenmontiert.

Bei dem beschriebenen Anwendungsfall treten Ströme bis zu 100 Ampere auf, und die Kondensatoren haben dabei eine Kapazität von annähernd 3000 bis 4000 Mikrofarad, um einen zuverlässigen EMV-Schutz der Schaltungsanordnung zu gewährleisten.

### Bezugszeichen

- 1: erstes Gehäuseteil
- 2: zweites Gehäuseteil
- 3: Leiterplatte
- 4: Kondensator
- 5: Zenerdiode
- 6: Steckereinrichtung
- 7: Steckerelement
- 8: Leistungselektronik
- 9: Steuerelektronik
- 10: Halbkreisförmige Ausnehmung
- 11: Wärmeleitkleber
- 12: Erster Bereich des ersten Gehäuseteiles
- 13: Zweiter Bereich des ersten Gehäuseteiles
- 14: Gehäuserand
- 15: Gehäuseinneres
- 16: Erste Seite der Leiterplatte
- 17: Zweite Seite der Leiterplatte

## Patentansprüche

1. Elektronische Einrichtung für ein Kraftfahrzeug, welche in einem zweiteiligen Gehäuse (1, 2) eine zum Schalten hoher Ströme ausgebildete Elektronikeinheit (8, 9) aufweist, wobei zur Unterdrückung der dadurch hervorgerufenen Störsignale eine Kondensatoreinheit (4) im Gehäuse angeordnet ist, wobei die großflächig ausgebildete Kondensatoreinheit (4) und die Elektronikeinheit (8,9) räumlich getrennt auf einem Trägersubstrat (3) angeordnet sind, **dadurch gekennzeichnet, daß** die Kondensatoreinheit (4) wärmetechnisch mit einem ersten Bereich (12) und die Elektronikeinheit (8,9) wärmetechnisch mit einem zweiten Bereich (13) eines ersten Gehäuseteiles (1) verbunden sind.

2. Elektronische Einrichtung nach Anspruch 1 **dadurch gekennzeichnet, daß** die Kondensatoreinheit (4) auf einer, dem ersten Gehäuseteil (1) zugewandten Oberfläche (17) des Trägersubstrates (3) angeordnet ist, während die Elektronikeinheit (8,9) auf einer, dem ersten Gehäuseteil (1) abgewandten Oberfläche (16) des Trägersubstrates (3) angeordnet ist, wobei der erste Bereich (12) des ersten Gehäuseteiles auf der Kondensatoreinheit (4) aufliegt, während der zweite Bereich (13) des ersten Gehäuseteiles (1) annähernd vollständig auf der, den ersten Gehäuseteil (1) zugewandten Oberfläche (17) des Trägersubstrates (3) aufliegt.

3. Elektronische Einrichtung nach Anspruch 2 **dadurch gekennzeichnet, daß** die, die Elektronikeinheit (8,9) bildenden Bauteile auf der, dem ersten Gehäuseteil (1) abgewandten Oberfläche (16) des Trägersubstrates (1) oberflächen montiert sind.

4. Elektronische Einrichtung nach Anspruch 2 **dadurch gekennzeichnet, daß** der erste Bereich (12) des ersten Gehäuseteiles (1) an seiner Innenfläche der Außenkontur der Kondensatoreinheit angepaßt ist.

5. Elektronische Einrichtung nach Anspruch 4 **dadurch gekennzeichnet, daß** die Kondensatoreinheit (4) aus einzelnen Kondensatorelementen (4a, 4b, 4c) gebildet ist, wobei die Innenfläche des ersten Bereiches (12) des ersten Gehäuseteiles (1) der Außenkontur der einzelnen Kondensatorelemente (4a, 4b, 4c) entsprechende halbkreisförmige Vertiefungen (10) aufweist.

6. Elektronische Einrichtung nach Anspruch 4 oder 5 **dadurch gekennzeichnet, daß** eine Wärmeleitkleberschicht (11) zwischen der Kondensatoreinheit (4) und dem ersten Bereich (12) des ersten Gehäuseteiles (1) angeordnet ist.

7. Elektronische Einrichtung nach einem der vorhergehenden Ansprüche **dadurch gekennzeichnet, daß** zwischen dem ersten (1) und einem zweiten Gehäuseteil (2) eine nach außen geführte Steckereinrichtung (6) angeordnet ist, deren Steckerelemente (7) zur Herstellung einer elektrischen Verbindung mit der Kondensatoreinheit (4) oder der Elektronikeinheit (8,9) auf dem Trägersubstrat (3) verbunden sind.

## Claims

1. Electronic device for a motor vehicle, having an electronics unit (8, 9) in a two-part housing (1, 2), said electronics unit being designed for switching high currents, a capacitor unit (4) being arranged in the housing for the purpose of suppressing the interference signals brought about thereby, the capacitor unit (4) formed in large-area fashion and the electronics unit (8, 9) being arranged spatially separately on a carrier substrate (3), **characterized in that** the capacitor unit (4) is thermally connected to a first region (12) and the electronics unit (8, 9) is thermally connected to a second region (13) of a first housing part (1).

2. Electronic device according to Claim 1, **characterized in that** the capacitor unit (4) is arranged on a surface (17) of the carrier substrate (3) that faces the first housing part (1), while the electronics unit (8, 9) is arranged on a surface (16) of the carrier substrate (3) that is remote from the first housing part (1), the first region (12) of the first housing part bearing on the capacitor unit (4), while the second region (13) of the first housing part (1) bears approximately completely on the surface (17) of the carrier substrate (3) that faces the first housing part (1).

3. Electronic device according to Claim 2, **characterized in that** the components forming the electronics unit (8, 9) are surface-mounted on the surface (16) of the carrier substrate (1) that is remote from the first housing part (1).

4. Electronic device according to Claim 2, **characterized in that** the first region (12) of the first housing part (1) is adapted at its inner area to the outer contour of the capacitor unit.

5. Electronic device according to Claim 4, **characterized in that** the capacitor unit (4) is formed from individual capacitor elements (4a, 4b, 4c), the inner area of the first region (12) of the first housing part (1) having semicircular depressions (10) corresponding to the outer contour of the individual capacitor elements (4a, 4b, 4c).

6. Electronic device according to Claim 4 or 5, **characterized in that** a thermally conductive adhesive layer (11) is arranged between the capacitor unit (4) and the first region (12) of the first housing part (1).

7. Electronic device according to one of the preceding claims, **characterized in that** a connector device (6) routed towards the outside is arranged between the first (1) and a second housing part (2), the connector elements (7) of said connector device, for producing an electrical connection, being connected to the capacitor unit (4) or the electronics unit (8, 9) on the carrier substrate (3).

## Revendications

1. Dispositif électronique destiné à un véhicule automobile et qui comporte, dans un boîtier (1, 2) en deux parties, une unité électronique (8, 9) conçue pour commuter des courants élevés, alors que, pour supprimer des signaux parasites qui sont ainsi provoqués, une unité de condensateurs (4) est disposée dans le boîtier, l'unité de condensateurs (4), conçue avec une grande surface, et l'unité électronique (8, 9) étant montées séparément l'une de l'autre sur un substrat porteur (3), **caractérisé par le fait que** l'unité de condensateurs (4) est reliée, au point de vue thermique, à une première zone (12) d'une première partie (1) du boîtier et que l'unité électronique (8, 9) est reliée, au point de vue thermique, à une deuxième zone (13) d'une première partie (1) du boîtier.

2. Dispositif électronique selon la revendication 1 **caractérisé par le fait que** l'unité de condensateurs (4) est montée sur une face (17) du substrat porteur (3) tournée vers la première partie (1) du boîtier, alors que l'unité électronique (8, 9) est montée sur une face (16) du substrat porteur (3) opposée à la première partie (1) du boîtier, la première zone (12) de la première partie du boîtier étant appliquée sur l'unité de condensateurs (4), alors que la deuxième zone (13) de la première partie (1) du boîtier est appliquée presque entièrement sur la face (17) du substrat porteur (3) tournée vers la première partie (1) du boîtier.

3. Dispositif électronique selon la revendication 2 **caractérisé par le fait que** les composants formant l'unité électronique (8, 9) sont montés en surface sur la face du substrat porteur (3) opposée à la première partie (1) du boîtier.

4. Dispositif électronique selon la revendication 2 **caractérisé par le fait que** la première zone (12) de la première partie (1) du boîtier est adaptée sur sa surface intérieure au contour extérieur de l'unité de condensateurs.

5. Dispositif électronique selon la revendication 4 **caractérisé par le fait que** l'unité de condensateurs (4) est formée par des éléments de condensateurs (4a, 4b, 4c) séparés, la surface intérieure de la première zone (12) de la première partie (1) du boîtier comportant des évidements (10) semi-circulaires correspondant au contour extérieur des différents éléments de condensateurs (4a, 4b, 4c).

6. Dispositif électronique selon la revendication 4 ou 5 **caractérisé par le fait qu'**une couche de colle thermoconductrice (11) est appliquée entre l'unité de condensateurs (4) et la première zone (12) de la première partie (1) du boîtier.

7. Dispositif électronique selon l'une des revendications précédentes **caractérisé par le fait que**, entre la première partie (1) et une deuxième partie (2) du boîtier, est disposé un dispositif de connexion (6) conduisant vers l'extérieur, dont les éléments enfichables (7) sont reliés, sur le substrat porteur (3), à l'unité de condensateurs (4) ou à l'unité électronique (8, 9) pour établir une liaison électrique.
